# EUROPEAN PATENT APPLICATION

(11) **EP 4 621 511 A1**
(43) Date of publication of application: **24.09.2025**
(21) Application number: 24386032.7
(22) Date of filing: 20.03.2024
(51) Int. Cl.: G05B 23/02

(54) **PROCESSING SYSTEM AND METHOD FOR ELECTRIC POWER SYSTEM CONTROL AND/OR MONITORING, AND MACHINE-READABLE INSTRUCTION CODE**

(71) Applicant: Hitachi Energy Ltd, 8050 Zürich (CH)
(72) Inventor: Dalle Ave, Giancarlo, Toronto, M9P1J5 (CA); Marino, David Giovanni, Montreal, H2R 2P1 (CA); Chakravorty, Jhelum, Montreal, Quebec H3G1Y2 (CA); Hilliard, Antony Foster, Montréal, Quebec, H2E1W4 (CA); Schmitt, Susanne, 69115 Heidelberg (DE); Hafiz, Faeza, Apex, NC 27502 (US); Mitrentsis, Georgios, 70372 Stuttgart (DE)
(74) Representative: Meier, Florian

(57) **Abstract**

To process monitoring data (68) during operation of an electric power system, a processing system (60) controls a human machine interface (62) to output an alarm panel, enable an operator input to select a list element from the alarm list, and, responsive to the operator input, cause at least one control action to be performed. The alarm panel comprises several icon sequences for several alarms.

## Description

### TECHNICAL FIELD

Embodiments of the invention relate to processing systems and methods for electric power system control and/or electric power system monitoring. Embodiments of the invention relate in particular to processing systems and methods operative to provide alarms responsive to monitoring data obtained for the electric power system.

### BACKGROUND

Power system operators deal with a large number of alarms generated by the corresponding network monitoring and control components. Alarms for transmission and distribution systems are useful to allow different situations in power grids to be detected and to take appropriate action to prevent, correct, and/or control undesired power grid states. An inefficient alarm system can make efficient alarm handling more challenging. A lack of efficient alarm handling can lead to a situation that might jeopardize the normal operation of the various grid components or even the stability of the power grid. Hence, enhanced techniques of alarm processing are of importance for ensuring the reliable power grid operation.

The challenge of processing alarms in a manner that allows swift, efficient, and reliable resolution of an alarm-triggering situation in an electric power system is exacerbated by the fact that legacy power grid control and monitoring systems represent alarms by textual descriptions. In view of limited screen space, this makes it challenging for an operator to maintain awareness of alarms. The challenge is even greater for a control or monitoring system that allows the operator to multitask by switching between different screen views, where it is particularly challenging for an operator to maintain awareness of alarms when working on a screen view other than an alarm list screen view. A human machine interface (HMI) that provides an additional screen to concurrently display an alarm list screen view (on one screen) and a control or monitoring screen view different from the alarm list screen view (on another screen) does not address the issue, as it is also challenging for an operator to concurrently maintain awareness of two screens, even when positioned adjacent to each other.

EP 4 149 075 A1 and US 2015/0268684 A1 disclose systems or methods useful in association with alarms.

There is still a need for improved techniques that allow suitable actions to be taken in association with electric power system control and/or management responsive to alarms.

### SUMMARY

It is an object of the invention to provide methods and/or processing systems that provide enhanced techniques of providing alarms based on monitoring data obtained from an electric power system, in particular an electric power grid. It is also an object to provide such methods and/or processing systems that mitigate the risk of an inadequate response to an alarm situation when alarms are output via an HMI of a processing system, the processing system being operative for controlling and/or monitoring an electric power system. It is an optional object to provide such methods and/or processing systems that facilitate maintaining situational awareness of alarms even when outputting a screen view different from an alarm list screen view.

According to exemplary embodiments, a processing system, a method, and machine-readable instruction code as recited in the independent claims are provided. The dependent claims define preferred or advantageous embodiments.

According to an aspect of the invention, there is provided a processing system for electric power system control and/or electric power system monitoring, at least one interface operative to receive monitoring data during operation of an electric power system. The processing system comprises at least one processing circuit operative to process the monitoring data to generate alarms and to: control an HMI to output an alarm panel comprising several graphical alarm representations, the several graphical alarm representations comprising several icon sequences for at least some of the alarms; control the HMI to enable an operator input to perform an alarm selection from the several graphical alarm representations in the alarm panel; and cause, responsive to the alarm selection, a control action to be performed.

Various effects and advantages are attained by the processing system. The processing system is operative to enable the operator input to perform the alarm selection from an alarm panel that comprises several icon sequences. Each of the icon sequences can provide a high-level representation indicating, e.g., an alarm type. Thereby, the operator input causing the control action can be performed in an alarm panel that comprises several icon sequences. While icons are popular in desktop user interfaces and mobile terminals, conventional electric power system control and/or monitoring applications do not use icons (let alone icon sequences) for conveying alarm-related information. The alarm panel comprising icon sequences for alarms provides a more compact way of conveying alarm-related information, thereby making it easier for an operator to maintain situational awareness. This contributes to safe and reliable electric power system operation (e.g., to safe and reliable electric power grid operation). This allows the control action to be triggered via the alarm panel while allowing an HMI screen view different from an alarm list screen view to be output concurrently with the alarm panel or otherwise integrating the alarm panel into an HMI screen view.

The alarm panel may be an overlay window displayed over a screen view different from an alarm list screen view or a portion of an alarm list screen view.

Thereby, the icon sequences may be used in a versatile manner. The effect of providing a way of outputting alarms that is spatially more compact than legacy alarm lists that consist of alphanumeric strings (i.e., textual descriptions) can be harnessed both for an overlay window and within an alarm list screen view.

The at least one processing circuit may be operative to generate the icon sequences based on the alarms, using icon sequence rules stored in a storage system accessible to the at least one processing circuit. The icon sequence rules may define, for each of several alarm types, and optionally in a region-specific (e.g., country-specific) manner, which icon sequence is associated with any of the alarm types for which an icon sequence is available. The icon sequence rules define a formal language of icons.

Thereby, the at least one processing circuit may execute a conventional alarm generator to obtain the alarms, which it subsequently converts into alarm sequences in accordance with the icon sequence rules.

Each of the alarms may be associated with a point class. The sequence rules may define, for each of the point classes, and optionally in a region-specific (e.g., country-specific) manner, which icon sequence is associated with any of the point classes.

Thereby, the at least one processing circuit may execute a conventional alarm generator to obtain the alarms, associating each of the alarms with a point class, which it subsequently converts into alarm sequences in accordance with the icon sequence rules.

The at least one processing circuit may be operative to control the HMI such that the alarm panel comprises the several graphical alarm representations as an ordered list.

Thereby, the context of different alarms is preserved in the alarm panel, in accordance with an ordering criterion, even when icon sequences are used to represent at least some of the alarms.

The ordering criterion may be a time-based order in accordance with an alarm time.

Thereby, the temporal context of different alarms is preserved in the alarm panel, in accordance with an ordering criterion, even when icon sequences are used to represent at least some of the alarms.

The processing system may be operative to associate each of the icon sequences with an alarm time corresponding to the alarm for which the icon sequence provides a graphical representation, and to generate the list of graphical representations in the alarm panel based on the alarm times.

Thereby, the temporal context of different alarms is preserved in the alarm panel, in accordance with an ordering criterion, even when icon sequences are used to represent at least some of the alarms.

The at least one processing circuit may be operative to control the HMI such that the several icon sequences in the alarm panel are continually updated responsive to new alarms being raised.

Thereby, the processing system provides a live feed of new graphical representations for alarms. This is particularly useful when the alarm panel is an overlay window over an HMI screen view different from the alarm list view.

The at least one processing circuit may be operative to control the HMI such that each of the several icon sequences represents a state change in the electric power system that triggers an alarm, the at least one processing circuit being operative to identify the state change based on the monitoring data.

Thereby, the processing system facilitates conveying information on state changes that trigger alarms. By associating different icons with different states of a primary system equipment type (such as circuit breaker, power switch, transformer, inverter/converter, valve hall, generator), the processing system can provide information on state changes using a formal icon language.

The icon sequence rules may comprise definition data defining, for each of several types of primary system equipment (such as circuit breaker, power switch, transformer, inverter/converter, valve hall, generator), each of the different states of the respective type of primary system equipment with an icon. The icons may be unique in the sense that, for any type of primary system equipment, the icon sequence rules do not provide the same icon for different states of the same primary system equipment. The icons may be unique in the sense that, for different types of primary system equipment, the icon sequence rules define different icons, such that any icon is linked to only one type of primary system equipment among the types of primary system equipment for which icon sequences are defined.

Thereby, alarm-related information may be provided using the formal icon language. This contributes to safe and reliable electric power system operation, by mitigating the risk of an inadequate action being taken in view of the alarms in the alarm panel.

The several icon sequences may comprise at least one icon sequence indicating a state change of primary system equipment of the electric power system.

Thereby, the processing system facilitates conveying information on state changes in the primary system of the electric power system that trigger alarms. This contributes to safe and reliable electric power system operation, by mitigating the risk of an inadequate action being taken in view of the alarms in the alarm panel.

The at least one processing circuit may be operative to determine the several icon sequences based on alarm types (e.g., point classes) of the alarms related to the electric power system.

Thereby, the at least one processing circuit may execute a conventional alarm generator to obtain the alarms, associating each of the alarms with an alarm type, which it subsequently converts into alarm sequences in accordance with the icon sequence rules.

The at least one processing circuit may be operative to control the HMI such that the several icon sequences comprise at least one (optionally more than one) icon sequence comprising at least two different icons that are output concurrently, and, optionally, an indicator symbol (such as an indicator) indicating a direction of a change from a state represented by one of the at least two different icons to another one of the at least two different icons.

Thereby, the alarm panel provides information on the alarms in a time-efficient manner, concurrently indicating the several states involved in a state change by means of icons and obviating a time delay that would be associated with a temporally consecutive outputting of the at least two different icons. Thereby, any delay that would be associated with a temporally consecutive outputting is eliminated, and a swift and timely resolution of the situation giving rise to the respective alarm is facilitated.

The processing system may be operative to, responsive to determining that an alarm is time-critical, control the HMI such that the several icon sequences comprise at least one (optionally more than one) icon sequence comprising at least two different icons that are output concurrently.

Thereby, the alarm panel provides information on time-critical alarms such that any delay that would be associated with a temporally consecutive outputting is eliminated, and a swift and timely resolution of the situation giving rise to the respective alarm is facilitated.

The at least one processing circuit may be operative to control the HMI such that the several icon sequences comprise an animated icon sequence comprising at least two different icons that are output consecutively.

Thereby, the screen space required for the alarm panel is further reduced, maximizing the screen space available for other control and/or monitoring applications that may be performed by the operator while concurrently maintaining situational awareness of the alarms in the alarm panel.

The at least one processing circuit may be operative to control the HMI such that the several icon sequences comprise a composite icon sequence for at least two different alarms.

Thereby, the processing system is operative to aggregate different alarms into an alarm sequence. This not only reduces the screen space requirements for the alarm panel, but also allows related alarms to be aggregated into a single composite icon sequence.

The at least one processing circuit may be operative to control the HMI such that the composite icon sequence is output for at least two different alarms conditionally dependent on a verification that the at least two different alarms relate to a same power system equipment (e.g., primary system equipment, such as a same circuit breaker, power switch, transformer, inverter/converter, valve hall, generator, without being limited thereto).

Thereby, the processing system is operative to aggregate different alarms into an alarm sequence based on and conditionally dependent on a verification that confirms that the different alarms relate to a same electric power system equipment.

The at least one processing circuit may be operative to control the HMI to output the alarm panel as an overlay over an HMI screen view different from an alarm list screen view prior to the alarm selection.

Thereby, the processing system allows situational awareness of alarms to be maintained even when the operator works on the HMI screen view different from the alarm list screen view. Appropriate responses to alarms indicated by icon sequences in the alarm panel are thereby facilitated.

The at least one processing circuit may be operative to control the HMI to enable a further operator input on the HMI screen view different from the alarm list screen view, and, responsive to the further operator input, trigger a further control action. The further control action may comprise a control action affecting primary system equipment and/or secondary system equipment of the electric power system.

Thereby, the processing system allows situational awareness of alarms to be maintained while working on an HMI screen view different from the alarm list screen view, which allows the further control action to be initiated.

The HMI screen view different from the alarm list screen view may be a monitoring or control screen view.

The at least one processing circuit may be operative to control the HMI such that the alarm panel is output at a periphery of the HMI and/or at the periphery of the HMI screen view different from the alarm list screen view.

Thereby, the processing system allows situational awareness of alarms to be maintained while working on an HMI screen view different from the alarm list screen view. Arranging the alarm panel at the periphery of the HMI allows the operator to maintain awareness of the alarms represented by the icon sequences while avoiding occlusions at the more central portion of an HMI screen.

The at least one processing circuit may be operative to control the HMI to output the alarm panel as part of an alarm list screen view.

Thereby, information in the alarm list that is conventionally provided as a textual description can be spatially compressed. This facilitates integration of additional information into the alarm list, which additional information would conventionally not be available for displaying in view of screen space limitations.

The at least one processing circuit may be operative to control the HMI such that the alarm panel comprises text accompanying at least some of the icon sequences.

Thereby, the processing system can provide additional information in the alarm panel where such additional information is useful.

The text accompanying at least some of the icon sequences may comprise an identifier for a primary system equipment that has undergo a state change represented by the icon sequence.

Thereby, the processing system can provide additional information on the involved primary system equipment in the alarm panel.

The at least one processing circuit may be operative to identify, responsive to the operator input, a sub-set of an alarm list such that the sub-set comprises an alarm specified by the alarm selection, at least one alarm preceding the alarm specified by the alarm selection, and at least one other alarm following the alarm specified by the alarm selection, and to control, responsive to the operator input, the HMI to output a part of an alarm list that comprises the sub-set of the alarm list.

Thereby, the processing system is operative to switch to the alarm list screen view responsive to the operator input, thereby providing additional information on the alarms represented by icon sequences.

The at least one processing circuit may be operative to cause the control action to mitigate or correct an alarm-triggering situation in the electric power system.

Thereby, the processing system is operative as a control system that enables the operator input to trigger a corrective or mitigating action. This contributes to safe, reliable, and efficient electric power system control.

The at least one processing circuit may be operative to control the HMI to enable a further operator input while the alarm list screen view is being output; and cause the control action to be performed responsive to the further operator input to address an alarm-triggering situation in the electric power system giving rise to the at least one alarm for which the list element provides information.

Thereby, the processing system is operative to cause the control action to be performed selectively dependent on the alarm list screen view being or having been output via the HMI, in the context of other alarms adjacent the selected list element in the alarm list. The risk of an inadequate action being taken is thereby mitigated. This contributes to safe and reliable electric power system operation, e.g., to safe and reliable electric power system operation (e.g., power grid operation).

The processing system may be operative such that the control action and/or the further control action comprises an action affecting primary system equipment of the electric power system and/or secondary system equipment of the electric power system, the action being a corrective action or a mitigating action.

Thereby, the processing system is operative to cause the control action to mitigate or correct the situation that has given rise to the alarm. This contributes to safe and reliable electric power system operation, e.g., to safe and reliable electric power system operation (e.g., power grid operation).

The processing system may be operative to automatically cause the control action to be performed responsive to the further operator input.

Thereby, the processing system contributes to a prompt resolution of the situation triggering the alarm. This contributes to safe and reliable electric power system operation, e.g., to safe and reliable electric power system operation (e.g., power grid operation).

The control action may comprise any one or several of the following control actions related to an alarm of the alarm list: delegating the alarm (e.g., to a different system operator); marking the alarm; acknowledging the alarm; searching for past occurrences, past resolutions, and/or documentation about the alarm; navigating to a geographic or technical point of origin of the alarm (e.g., navigating in at least one monitoring or control tool to the geographic or technical point of origin of the alarm); initiating a communication link (e.g., with an operator in charge of primary system equipment that is a root-cause of the situation triggering the alarm); initiating a maintenance ticket (e.g., with a grid operator or with an operator of the primary system equipment that is a root-cause of the situation triggering the alarm).

Thereby, control actions relating to the processing of the alarm in the processing system and/or control actions relating to tasks for resolving the situation triggering the alarm may be caused to be performed (e.g., automatically or semi-automatically) by the processing system. In particular, a communication link that is useful for establishing data and/or voice communication to an operator responsible for the primary system equipment that is a root-cause of the situation triggering the alarm can be established automatically or semi-automatically, contributing to a swift resolution of the situation triggering the alarm.

The at least one processing circuit may be operative to generate the alarms based on the monitoring data.

Thereby, the processing system operates not only as an alarm generator, but also controls the HMI to enable additional information on an alarm to be output via the HMI in the context (e.g., the chronological context) of the alarm list.

According to another aspect of the invention, there is provided an electric power system. The electric power system may comprise a primary system comprising primary system equipment; a secondary system operative to perform control and/or monitoring functions for the primary system; and the processing system of an aspect or embodiment operative to communicatively interface with the secondary system to obtain the monitoring data.

Various effects and advantages are attained by the electric power system. The processing system is operative to enable the operator input to perform the alarm selection from an alarm panel that comprises several icon sequences. Each of the icon sequences can provide a high-level representation indicating, e.g., an alarm type. Thereby, the operator input causing the control action can be performed in an alarm panel that comprises several icon sequences. While icons are popular in desktop user interfaces and mobile terminals, conventional electric power system control and/or monitoring applications do not use icons (let alone icon sequences) for conveying alarm-related information. The alarm panel comprising icon sequences for alarms provides a more compact way of conveying alarm-related information, thereby making it easier for an operator to maintain situational awareness. This contributes to safe and reliable electric power system operation (e.g., to safe and reliable electric power grid operation). This allows the control action to be triggered via the alarm panel while allowing an HMI screen view different from an alarm list screen view to be output concurrently with the alarm panel or otherwise integrating the alarm panel into an HMI screen view. The risk of incorrect handling of a situation that causes an alarm in the electric power system (e.g., in a transmission grid and/or distribution grid) is thereby mitigated. The processing system contributes to safety and reliability of power grid operation.

The processing system may be operative to trigger at least one control action by controlling the HMI to enable the operator input and cause the at least one control action to be performed responsive to the further operator input.

Thereby, the processing system can trigger corrective action(s) and/or mitigating action(s) as appropriate, based on the alarms represented by icon sequences in the alarm panel.

The electric power system may comprise a SCADA system which may comprise a control subsystem, wherein the processing system is operative to cause the control subsystem to perform a control action responsive to the further operator input.

Thereby, the processing system can trigger, via the SCADA control subsystem, at least one control action. This allows corrective action(s) and/or mitigating action(s) to be triggered.

The electric power system may comprise the HMI. The HMI may be installed in a control center, e.g., in a power transmission and/or distribution grid control room.

Thereby, the processing system aids a power grid operator in his/her complex tasks, e.g., by reducing the risk of the at least one alarm not included in the alarm flood going unnoticed.

The electric power system may comprise an electric power generation, transmission, and/or distribution system. The processing system may be operative to process the monitoring data to generate alarms for an electric power transmission and/or distribution grid.

Thereby, the processing system is operative for use in association with an electric power system for which conventional alarm processing techniques have shortcomings.

The electric power system may comprise an electric power transmission and/or distribution grid.

Thereby, the processing system is operative for use in association with an electric power system for which conventional alarm processing techniques have shortcomings.

The electric power system may comprise a high voltage direct current (HVDC) system. The electric power system may comprise a an inverter/converter comprising insulated gate bipolar transistor (IGBT)- or thyristor-based valves.

Thereby, the processing system is operative for use in association with an electric power system in which alarm processing is often particularly challenging, also due to the fact that the HVDC system often comprises redundant implementations of both primary system equipment and secondary system devices to ensure continuous operation in case of, e.g., maintenance or asset failure.

According to a further aspect of the invention, there is provided a processing method for an electric power system. The processing method comprises receiving, by a processing system, monitoring data during operation of the electric power system; processing, by at least one processing circuit of the processing system, the monitoring data to generate alarms; controlling, by the at least one processing circuit, a human machine interface, HMI, to output an alarm panel comprising several graphical alarm representations, the several graphical alarm representations comprising several icon sequences for at least some of the alarms; controlling, by the at least one processing circuit, the HMI to enable an operator input to perform an alarm selection from the several graphical alarm representations in the alarm panel; and causing, by the at least one processing circuit and responsive to the alarm selection, a control action to be performed.

Various effects and advantages are attained by the processing method. The processing method enables the operator input the operator input to perform the alarm selection from an alarm panel that comprises several icon sequences. Each of the icon sequences can provide a high-level representation indicating, e.g., an alarm type. Thereby, the operator input causing the control action can be performed in an alarm panel that comprises several icon sequences. alarm panel comprising icon sequences for alarms provides a more compact way of conveying alarm-related information, thereby making it easier for an operator to maintain situational awareness. This contributes to safe and reliable electric power system operation (e.g., to safe and reliable electric power grid operation). This allows the control action to be triggered via the alarm panel while allowing an HMI screen view different from an alarm list screen view to be output concurrently with the alarm panel or otherwise integrating the alarm panel into an HMI screen view.

Optional features of the processing method and the effects attained thereby may correspond to the features and associated effects described in association with the processing system.

The processing method may be performed automatically by the processing system according to an aspect or embodiment or the electric power system according to an aspect or embodiment.

The method may be performed by or using the processing system to control and/or monitor the electric power system.

According to a further aspect of the invention, there is provided a control method of controlling primary system equipment and/or secondary system equipment of an electric power system (e.g., of a power distribution grid and/or a power transmission grid), comprising performing the processing method according to an aspect or embodiment and causing, by the processing system, the control action to be performed responsive to the operator input.

Thereby, the effects attained in association with the processing method are attained and utilized in a control method.

According to a further aspect of the invention, there is provided an operating method of operating primary system equipment and/or secondary system equipment of an electric power system (e.g., of a power distribution grid and/or a power transmission grid), comprising performing the processing method according to an aspect or embodiment and operating, by the processing system, the primary system equipment and/or secondary system equipment of the electric power system responsive to the operator input.

Thereby, the effects attained in association with the processing method are attained and utilized in a method of operating electric power system equipment.

According to a further aspect, there is provided machine-readable instruction code which, when executed by at least one programmable processing circuit, causes the at least one programmable processing circuit to perform the processing method, the control method, or the operation method according to any aspect or embodiment disclosed herein.

According to a further aspect, there is provided a non-transitory storage medium having stored thereon machine-readable instruction code which, when executed by at least one programmable processing circuit, causes the at least one programmable processing circuit to perform the processing method, the control method, or the operation method according to any aspect or embodiment disclosed herein.

Various effects and advantages are attained by embodiments of the invention. For illustration, the processing systems and methods according to embodiments provide enhanced techniques of processing alarms that mitigate the risk of inadequate handling of alarms, thereby contributing to the safety and reliability of power grid operation. The processing system and method facilitate maintaining situational awareness of alarms even when outputting a screen view different from an alarm list screen view. The processing system and method can be used in association with an electric power grid or subsystems thereof, without being limited thereto.

### BRIEF DESCRIPTION OF THE DRAWINGS

Embodiments of the invention will be described with reference to the drawings in which similar or identical reference signs designate elements with similar or identical configuration and/or function.
Fig. 1 is a block diagram of a processing system.
Fig. 2 is a schematic representation of an alarm panel generated under the control of the processing system.
Fig. 3 is a schematic representation of HMI output comprising an alarm panel generated under the control of the processing system.
Fig. 4 is a schematic representation of HMI output comprising an alarm panel generated under the control of the processing system.
Fig. 5 is a schematic diagram of an electric power system comprising the processing system.
Fig. 6 is a flow chart of a processing method.
Fig. 7 is a flow chart of a process useful in the processing method.
Fig. 8 is a flow chart of a processing method.
Fig. 9 is a flow chart of a process useful in the processing method.
Fig. 10 is a schematic representation of an alarm panel generated under the control of the processing system.
Fig. 11 is a schematic representation of a system comprising the processing system.
Fig. 12 is a schematic representation of an electric power system.
Fig. 13 is a schematic representation of an electric power system.

### DETAILED DESCRIPTION OF EMBODIMENTS

Embodiments of the invention will be described with reference to the drawings. In the drawings, similar or identical reference signs designate elements with similar or identical configuration and/or function.

Embodiments relate to processing systems and methods capable of processing monitoring data and control an HMI based on monitoring data for an electric power system, with the processing systems and method being operative to cause a control action to be performed responsive to an input enabled by the processing system. While embodiments will be described in detail primarily in association an electric power system that comprises a power transmission and/or power distribution system, the embodiments are not limited thereto.

As used herein, the term "electric power system" encompasses an electric power generation, transmission, and/or distribution system, e.g., an electric power grid or parts thereof.

As used herein, the term "power grid" encompasses a power transmission grid and/or a power distribution grid. The power grid may comprise both a power transmission grid and a power distribution grid. The term "power grid" encompasses a microgrid, optionally a microgrid comprising a distributed energy resource (DER).

As used herein, the term "monitoring data" encompasses measurements and event-based data. The monitoring data may comprise measurements and/or event-based data (e.g., GOOSE messages). The measurements may comprise any one or any combination of measurements related to electric variables of a power grid or components thereof (such as voltages, currents, phasor measurement unit (PMU) measurements, and/or frequency measurements), switchgear status (such as an open / closed status of an isolator and/or breaker), thermal variables (such as temperature measurements), insulation parameters (such as dissolved gas analysis (DGA) concentrations of an insulation oil or other insulation fluid, insulation moisture content, etc.). The monitoring data may be received by the processing system from secondary system components (e.g., intelligent electronic devices (IEDs)) of the electric power system.

As used herein, the term "alarm" may encompass alarms having various priorities (such as priorities assigned to an ordinal range of values, e.g., low / medium / high). Techniques for generating alarms are available to the skilled person, e.g., from applicant's commercial products. Techniques for generating alarms based on monitoring data may comprise comparing the monitoring data to nominal operating conditions defined for the electric power system. Various techniques of determining whether an alarm is to be raised are available to the skilled person. More advanced techniques may be used, such as techniques that perform power flow computation to anticipate potentially critical situations. With such techniques being available to the skilled person, the skilled person can use any of these known techniques for implementing the alarm generation based on monitoring data.

As used herein, the term "point class" refers to an alarm attribute specifying a type of alarm.

As used herein, the term "icon" refers to a graphical element that may be representative of a state of primary system equipment or secondary system equipment of the electric power system.

As used herein, the term "icon sequence" refers to an ordered set of two icons or more than two icons. The processing system may be operative to control the HMI to output the two or more icons concurrently in a spatially ordered manner (e.g., with an icon relating to an earlier state being displayed to the left of an icon relating to a later state of the same power system equipment), optionally with an indicator that specifies their order. Alternatively or additionally, the processing system may be operative to control the HMI to output the two or more icons time-sequentially.

As used herein, the term "icon sequence for an alarm" refers to an icon sequence that may represent an alarm type (e.g., a point class of the alarm) or a state change giving rise to the respective alarm.

As used herein, the term "alarm list screen view" refers to an HMI screen view that comprises a sequence of list elements, each associated with a single alarm or a several alarms (e.g., in the case of an alarm flood in which an identical alarm is raised in a temporally consecutive repeating manner without any intervening different alarms). Each list element may be associated with an alarm time, e.g., with the time at which the alarm on which the list element provides information is raised (if the list element is associated with and provides information on a single alarm), or with the most recent one of several alarm times of the alarms on which the list element provides information (if the list element is associated with and provides information on several alarms). The list elements of the alarm list may be ordered in accordance with an ordering criterion, such as time-based, importance-based, or context based. While reference will be made to time-based ordering in association with embodiments, the techniques disclosed herein are applicable also when other ordering criteria are employed, such as importance-based or context based.

As used herein, the term "HMI screen view different from the alarm list screen view" encompasses an HMI control and/or monitoring screen view different from the alarm list view.

As used herein, "enabling an operator input" and/or "enabling a further operator input" encompasses any one of a variety of input modalities, such as any one or any combination of the following, without being limited thereto: operator input via a pointer device (such as a computer mouse or touchpad); operator input via a touch-sensitive or proximity-sensitive screen or display of the HMI; operator input via voice commands in association with speech recognition and processing (using, e.g., an acoustoelectric transducer in association with a sound processing circuit); operator input via a gaze or eye tracker (using, e.g., a camera in association with a gaze or eye tracker processing).

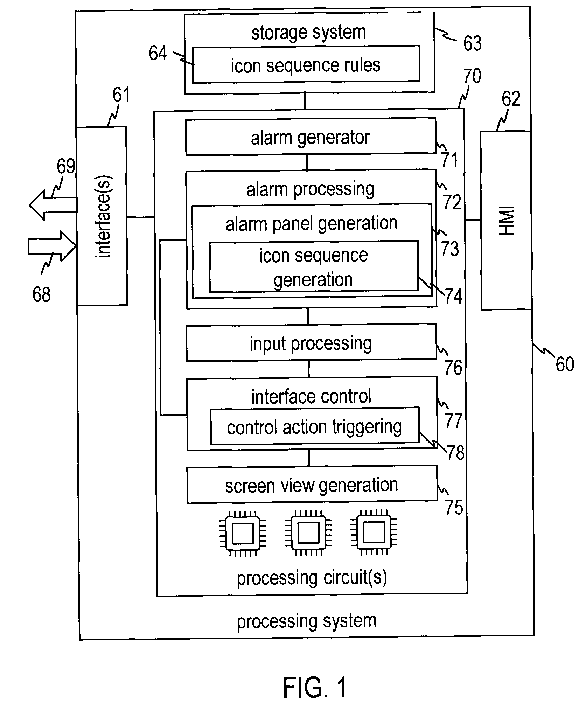

Fig. 1 shows a block diagram representation of the processing system 60. The processing system 60 comprises an at least one interface 61. The at least one interface 61 may comprise a data interface or other communication interface. The at least one interface 61 is operative to receive monitoring data 68 obtained for an electric power system. The monitoring data may comprise measurements. The measurements may comprise any one or any combination of measurements related to electric variables of a power grid or components thereof (such as voltages, currents, phasor measurement unit (PMU) measurements, and/or frequency measurements), thermal variables (such as temperature measurements), insulation parameters (such as dissolved gas analysis (DGA) concentrations of an insulation oil or other insulation fluid, insulation moisture content, etc.). The monitoring data may be received by the processing system from secondary system components (e.g., intelligent electronic devices (IEDs)) of the electric power system. Additionally or alternatively to measurements, the monitoring data 68 may comprise event-based data (e.g., GOOSE messages).

The processing system 60 may comprise an HMI 62. The HMI 62 may comprise an HMI installed in a power transmission system control room and/or power distribution system control room. The HMI 62 may comprise an HMI installed in a power grid control room (e.g., in a national or regional control center). The HMI 62 is operative to output an alarm panel comprising icon sequence representing alarms generated during field operation of the electric power system, responsive to the received monitoring data. The HMI 62 may be operative to output the alarm panel as an overview over an HMI screen view different from an alarm list view. The HMI 62 may be operative to output the alarm panel integrated into the alarm list view.

The processing system 60 may comprise a storage system 63 or may be communicatively interfaced with the storage system 63. The storage system 63 has stored therein icon sequence rules 64. The icon sequence rules 64 may define, for each of several types of primary system equipment of the electric power system, several icons that correspond to several distinct states of the respective type of primary system equipment. The icon sequence rules 64 may define an icon sequence as an ordered set of at least two different icons, which is dependent on the type of the primary system equipment involved in the alarm and the alarm type (e.g., point class) of the alarm.

The icon sequence rules 64 comprise data that allow alarms to be translated into icon sequences. The icon sequence rules 64 may comprise several rule sets for different geographical regions (e.g., for different countries) so that different icon sequences can be generated for a same alarm depending on in which region (e.g., in which country) the processing system 60 is operated.

Thus, the icon sequence rules 64 may define the rules of a formal icon-based language that indicates, at least at a high level, alarms and/or alarm-related characteristics.

The processing system 60 comprises at least one processing circuit 70. In the illustrated implementation, the at least one processing circuit 70 is operative to perform an alarm generation 71. The alarm generation 71 may determine which type of alarm is to be raised (e.g., line-ground fault, line-line-ground fault, overvoltage condition, overcurrent condition, other fault types) and, optionally, a severity of the alarm. The alarm generation 71 may process the received monitoring data 68 to determine whether and when an alarm is to be raised. To this end, the alarm generation 71 may compare an electric power system state as reflected by the monitoring data 68 to the nominal operation ranges of the power system components and/or may infer trends from the monitoring data 68 to anticipate potential future critical situations. Techniques of generating alarms are available to the skilled person from, e.g., applicant's commercially available products. The skilled person has at his/her disposal a wide variety of techniques of generating alarms, which can be used to implement the alarm generation.

The at least one processing circuit 70 is operative to perform an alarm processing 72. The alarm processing 72 may comprise an alarm panel generation 73 operative to generate the alarm panel comprising several icon sequences. The alarm panel generation 73 may comprise an icon sequence generation 74. The icon sequence generation 74 may be operative to access the icon sequence rules 64 and generate, for each of several alarms to be output in the alarm panel, an icon sequence for the respective alarm. The alarm panel generation 73 may be operative to determine an order of the several icon sequences related to different alarms, based on an ordering criterion. The ordering criterion may be time-based, priority-based, or based on another ordering principle that specifies the order in which the icon sequences for different alarms are to be output in the alarm panel. The alarm panel generation 73 may optionally be operative to generate alphanumeric strings (such as short textual descriptions) for outputting in the alarm panel in association with at least some of the icon sequences. The at least one processing circuit 70 comprises an interface control 77 operative to control the HMI 62 to output the alarm panel (e.g., via a display, screen, or other optical output device of the HMI 62), with the icon sequences being output in the alarm panel.

The at least one processing circuit 70 may be operative to control the HMI 62 such that the several icon sequences in the alarm panel are continually updated (i.e., updated on an ongoing basis) responsive to new alarms being raised. Thereby, the processing system provides a live feed of new graphical representations for alarms. This is particularly useful when the alarm panel is an overlay window over an HMI screen view different from the alarm list view.

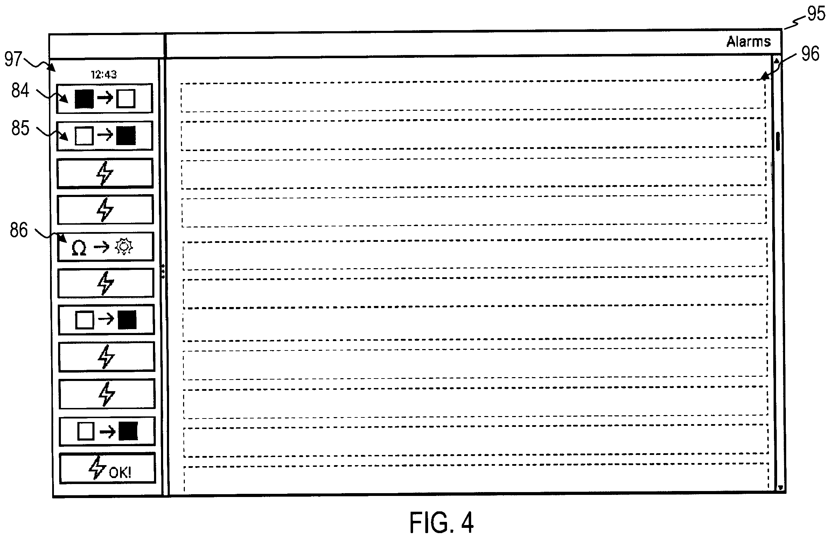

The at least one processing circuit 70 is operative to control the HMI 62 to enable an operator input. The operator input may in particular comprise an operator input selecting an icon sequence from the icon sequences of the alarm panel. The at least one processing circuit 70 is operative to perform an input processing 76 to process the operator input. The at least one processing circuit 70 is operative to cause a control action to be performed responsive to the operator input. Alternatively or additionally, the interface control 77 may be operative to control the HMI 62 to display an HMI screen view different from an alarm list view, with the alarm panel being presented as an overlay over part of the HMI screen view, and to control the HMI 62 to enable a further operator input via the HMI screen view different from an alarm list view. Thereby, the processing system 60 can enable control action(s) to be initiated via HMI control or monitoring screens over which the alarm panel is presented as an overlay window. To generate the HMI screen view different from the alarm list view, the at least one processing circuit 70 may be operative to perform a screen view generation 75. The screen view generation 75 may be operative to generate the HMI screen view different from the alarm list view and to generate the alarm list view (see, e.g., Fig. 4).

The at least one processing circuit 70 is operative to cause, responsive to the operator input that comprises a selection of an icon sequence in the alarm panel or responsive to a further operator input, the control action. The control action may comprise a control action that mitigates or corrects the situation giving rise to the alarm(s) with which the icon sequence selected by the operator input is associated. Causing the control action to be performed may comprise generating and providing output 69 comprising at least one control command. The control action may comprise a control action acting on primary system equipment or secondary system equipment of the electric power system (e.g., of an electric power grid). The control action may comprise a control action useful for alarm handling. The control action may comprise a control action operative to cause any one or any of combination of:
- delegating, responsive to the operator input and by the processing system, the alarm to someone else or to an automated agent;
- marking, responsive to the operator input and by the processing system, the alarm as "no action required;"
- acknowledging, responsive to the operator input and by the processing system, the alarm;
- searching, responsive to the operator input and by the processing system, for past occurrences, resolutions, or documentation about the alarm;
- navigating, responsive to the operator input and by the processing system, to the geographic or technical point of origin of the alarm (e.g., in a control system);
- initiating, responsive to the operator input and by the processing system, a telecommunications connection with a responsible organization or person;
- initiating, responsive to the operator input and by the processing system, a maintenance ticket with a control system administrator;
- initiating, responsive to the operator input and by the processing system, a maintenance ticket with an asset owner.

To perform the mentioned operations, the at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

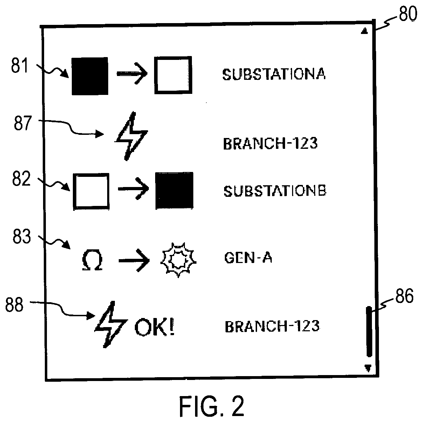

Operation of the processing system 60 may be explained in further detail in association with exemplary control operations with reference to Fig. 2, Fig. 3, and Fig. 4.

Fig. 2 shows an exemplary layout of an alarm panel 80 output via the HMI 62. The alarm panel 80 comprises graphical representations for alarms. The graphical representations comprise several icon sequences 81, 82, 83. The graphical representations may comprise graphical representations 87, 88 different from icon sequences. Each icon sequence 81, 82, 83 may comprise an ordered set of at least two icons. The alarm panel 80 may comprise textual components for at least some of the icon sequences. The textual descriptions may be reduced as compared to an alarm list screen view that provides additional information as compared to the alarm panel 80. The textual descriptions in the alarm panel 80 may be limited to time / date information and indicators for the electric power system equipment involved in the respective alarm.

The graphical representations in the alarm panel 80 may be ordered, under the control of the processing system 60, in accordance with an ordering criterion. The ordering criterion may be based on alarm time (e.g., the time at which the alarm generator 71 raises the alarm) and/or priority, without being limited thereto.

The alarm panel 80 may comprise an actuable element 86 that allows the operator to scroll through the graphical representations of alarms. The processing circuit 60 is operative to enable a user input selecting a graphical icon sequence, and to perform a control action responsive thereto (such as switching to an alarm list screen view and/or effecting a corrective or mitigating action that influences primary or secondary system equipment of the electric power system).

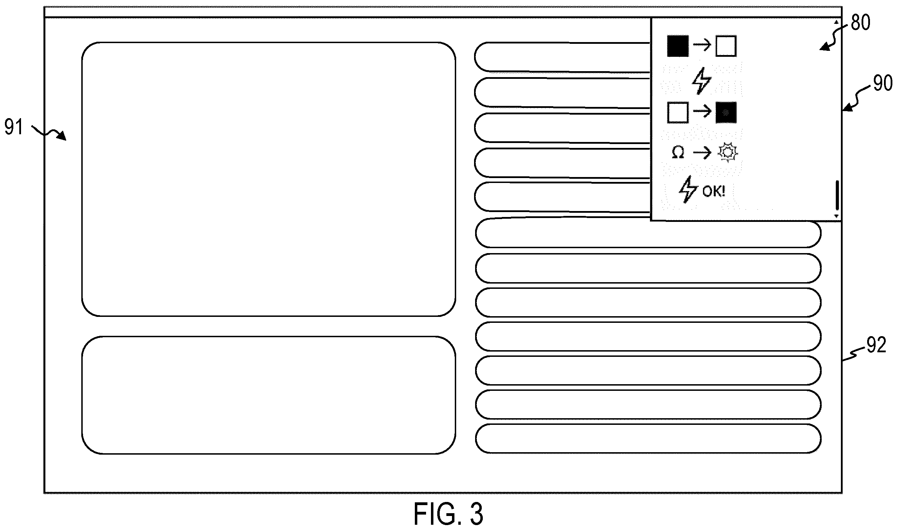

Fig. 3 shows an exemplary output 90 provided via the HMI 62 under the control of the processing system 60. The output 90 comprises an HMI screen view 91 different from the alarm list view. The HMI screen view 91 may be a control or monitoring screen view different from the alarm list view. The processing system 60 is operative to control the HMI 62 such that the alarm panel 80 is output as an overlay overlapping part of the HMI screen view 91. The processing system 60 is operative to control the HMI 62 such that the alarm panel 80 is output as an overlay at a periphery 92 (such as an upper or right) periphery of the HMI screen view 91.

As illustrated in Fig. 3, the processing system 60 is operative such that the icon sequence(s) 81, 82, 83 may be displayed in a corner of a desktop application view to give peripheral awareness of alarms that are being raised in a "live feed". The processing system 60 may be operative to enable the operator to navigate through different HMI screen views, while maintaining the alarm panel 80 as an overlay over the different HMI screen views for continued awareness of alarms as they are being raised.

Fig. 4 shows an exemplary output 95 provided via the HMI 62 under the control of the processing system 60. The output 95 may be or may comprise an alarm list view, comprising a sub-set of alarms 96 arranged as an element list. The alarm list view 95 may comprise an alarm panel 97 as a part thereof, e.g., to indicate the type(s) of alarms and/or state changes giving rise to the alarms. The alarm panel 97 may comprise several icon sequences 84, 85, 86, each comprising an ordered sequence of at least two icons.

The processing system 60 may be operative to, responsive to the operator input that selects an icon sequence in the alarm panel 80 overlaid on the HMI screen view 91, control the HMI 60 to output the alarm list view 95, comprising a sub-set of alarms that depends on which icon sequence was selected by the operator input in the alarm panel 80. The icon sequence(s) 84, 85, 86 for at least some of the alarms may be displayed in the alarm panel 97 comprised by the alarm list view.

As compared to conventional alarm list view screens of electric power system control and/or monitoring applications, the alarm panel 97 allows information on alarm-triggering situations (such as status changes of primary system equipment) to be provided.

The processing system 60 may be operative to control the HMI 62 to enable a further operator input, which may select an icon sequence 84, 85, 86 in the alarm panel 97 or which may select one of the list elements in the sub-set 96. The processing system 60 may be operative to cause at least one control action to be performed responsive to the further operator input. The at least one control action may comprise a control action that mitigates or corrects the situation giving rise to the alarm(s) with which the icon sequence selected by the operator input is associated. The at least one control action may comprise a control action acting on primary system equipment or secondary system equipment of the electric power system (e.g., of an electric power grid). The at least one control action may comprise a control action useful for alarm handling. The at least one control action may comprise a control action operative to cause any one or any of combination of: delegating, responsive to the further operator input and by the processing system, the alarm to someone else or to an automated agent; marking, responsive to the further operator input and by the processing system, the alarm as "no action required;" acknowledging, responsive to the further operator input and by the processing system, the alarm; searching, responsive to the further operator input and by the processing system, for past occurrences, resolutions, or documentation about the alarm; navigating, responsive to the further operator input and by the processing system, to the geographic or technical point of origin of the alarm (e.g., in a control system); initiating, responsive to the further operator input and by the processing system, a telecommunications connection with a responsible organization or person; initiating, responsive to the further operator input and by the processing system, a maintenance ticket with a control system administrator; initiating, responsive to the further operator input and by the processing system, a maintenance ticket with an asset owner.

While Fig. 2, Fig. 3, and Fig. 4 illustrate implementations in which the several icons of an icon sequence are output concurrently in the alarm panel 80, 97, together with a symbol that indicates the sequence of events giving rise to the respective alarm, the several icons of an icon sequence may be displayed consecutively, providing a dynamic graphical representation that varies over time. The dynamic icon sequence further reduces the screen space requirements for outputting the alarm panel 80, 97.

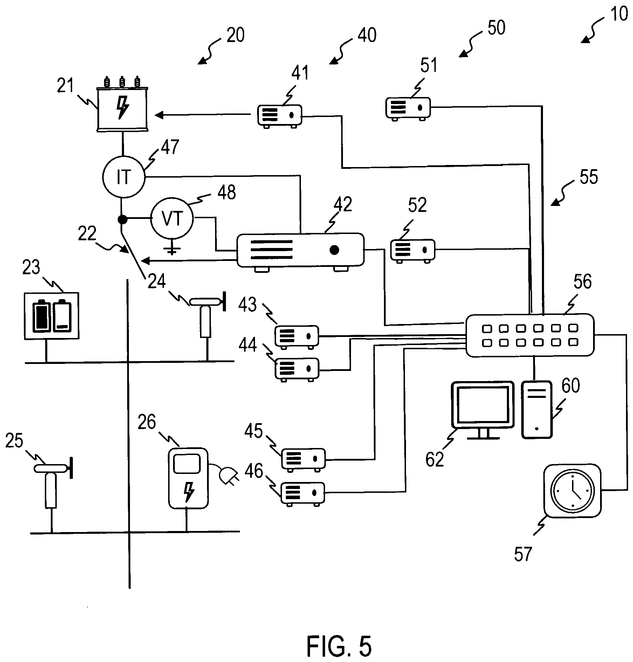

Fig. 5 is a schematic representation of an electric power system 10 according to an embodiment. The electric power system 10 comprises a primary system 20. The primary system 20 may be or may comprise an electric power generation, transmission, and/or distribution system, e.g., a power transmission and/or power distribution grid or part thereof. The primary system 20 may comprise at least part of an electric power grid.

The primary system 20 may comprise switchgear such as switches or circuit breakers (CBs) 22, transformers 21, and other primary system equipment. The electric power system 10 may have renewables penetration, with the primary system 20 comprising renewable energy resources 24, 25, energy storage systems (ESS), such as battery storage systems 23. The primary system 20 may also comprise charging infrastructure 26. Such components of non-conventional AC power systems add to the complexity of the electric power system dynamics. In such cases, the processing system 60 is particularly useful, without being limited to such use cases.

The system 10 comprises a secondary system 40. The secondary system 40 comprises a plurality of devices 41, 42, 43, 44, 45, 46. The secondary system 40 comprises measurement instrumentation 47, 48. At least some of the devices 41, 42, 43, 44, 45, 46 of the secondary system 40 may be operative to execute a decision logic to implement a control of components of the primary system 20, such as switchgear 22 or a transformer 21. At least some of the devices 41, 42, 43, 44, 45, 46 of the secondary system 40 may be operative to execute a decision logic based on measurements, such as measurements received from measurement instrumentation 47, 48. The secondary system device(s) 41, 42, 43, 44, 45, 46 may comprise merging units (MUs) operative to provide monitoring data to the processing system 60. Alternatively or additionally, the secondary system device(s) 41, 42, 43, 44, 45, 46 may be operative to provide event-based messages to the processing system 60 as part of the monitoring data. Examples for devices 41, 42, 43, 44, 45, 46 of the secondary system comprise protection relays or other IEDs which may be operative to perform distance protection or time protection or other protection functions. The measurement instrumentation of the secondary system 40 may comprise a current transformer 47, in voltage transformer 48, phasor measurement units, frequency measurement units, or other measurement instrumentation such as measurement instrumentation operative to measure temperature(s), insulation-state related data (such as dissolved gas analysis (DGA) concentrations in an insulation oil or other insulation fluid, or insulation moisture).

The electric power system 10 may optionally comprise a redundancy system 50 which provides redundant implementations for at least some of the functions performed by the devices 41, 42, 43, 44, 45, 46 of the secondary system 40. The redundancy system 50 may be implemented in various ways. For illustration, there may be a dedicated redundant device 51, 52 associated with one of the devices of the secondary system 40 in a one-to-one-correspondence. Other implementations are possible. For illustration, there may be a centralized redundancy system which may provide redundancy for functions performed by several of the secondary system devices 41, 42, 43, 44, 45, 46.

The system 10 comprises a communication system 55. The communication system 55 may comprise a communication network. The communication system 55 may comprise a plurality of communication links by which devices of the secondary system 40 communicate with each other and with the processing system 60. Communication may be performed using communication devices such as gateway devices 58. The secondary system 40 and the processing system 60 may be operative to interface with a time source 57. The secondary system devices 41, 42, 43, 44, 45, 46 and the processing system 60 are operative to determine event times and/or alarm times with reference to a time provided by the time source 57.

As described in more detail herein, the processing system 60 is operative to process monitoring data to generate alarms and control the HMI 62 to output an alarm panel, enable an operator input, and perform a control action responsive to the operator input. The output 69 of the processing system 60 generated responsive to the operator input or the further operator input may comprise control commands to control, e.g., secondary system devices 41, 42, 43, 44, 45, 46 and/or redundancy system devices 51, 52 and/or the HMI 62.

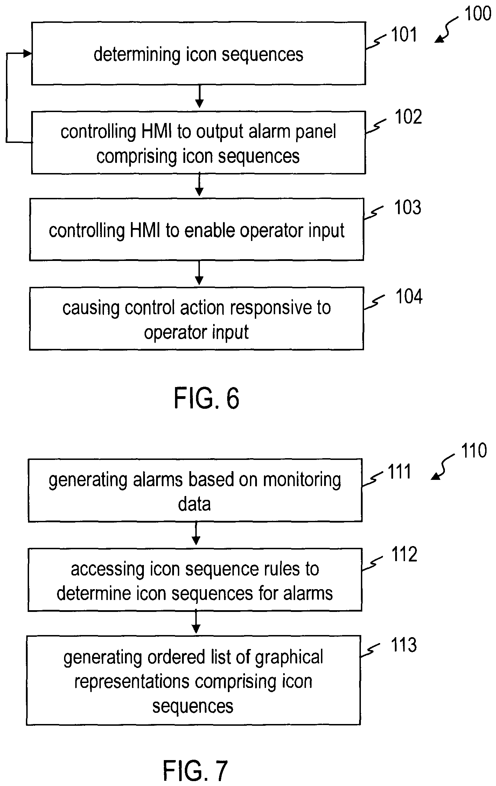

Fig. 6 is a flow chart of a method 100. The method 100 may be performed automatically by the processing system 60.

At process block 101, the processing system 60 determines several icon sequences. Each of the several icon sequences may relate to (e.g., may represent a state change giving rise to) an alarm generated based on the monitoring data obtained for the electric power system.

At process block 102, the processing system 60 controls the HMI 62 to output the alarm panel 80, 97 comprising the several icon sequences 81-86.

At process block 103, the processing system 60 controls the HMI 62 to enable an operator input that selects an icon sequence from the alarm panel.

At process block 104, the processing system 60 causes a control action to be performed responsive to the operator input. The control action may comprise any one or any combination of: a control action that causes an alarm list view 80 to be output by the HMI 62; a control action acting on primary system equipment or secondary system equipment of the electric power system, to thereby mitigate or remove the root cause of the alarm-triggering situation; a control action related to handling the alarm, such as the automatic establishment of a communication link required to address the root cause of the alarm-triggering situation.

As schematically indicated by the arrow between process blocks 101, 102, the method 100 may comprise continually updating the icon sequences in the alarm panel 80 as new alarms are being raised. This is particularly useful for the alarm panel 80 that is caused to be displayed as an overlay window.

Fig. 7 is a flow chart of a procedure 110. The procedure 110 may be performed automatically by the processing system 60. The procedure 110 may be performed in process block 101 of the method 100 of Fig. 6.

At process block 111, the processing system 60 generates alarms based on the monitoring data received by the processing system 60.

At process block 112, the processing system 60 accesses the icon sequence rules 64 in the storage system 63. Accessing the icon sequence rules 64 may be performed based on a region (e.g., country) in which the processing system 60 operates, to accommodate regional (e.g., country-specific) differences in the icon sequences. The processing system 60 may generate, based on the icon sequence rules and the alarms generated at process block 111, several icon sequences. The processing system may determine an order of the several icon sequences based on an ordering criterion, such as a time-based ordering in dependence on alarm time and/or a priority-based ordering.

At process block 113, the processing system 60 generates the list of graphical representations for inclusion in the alarm panel 80, 97. The list of graphical representations comprises the several icon sequences. In the alarm panel 80, 97, the several icon sequences may be ordered in accordance with the ordering determined based on alarm time and/or priority, without being limited thereto.

The processing system 60 may be operative such that the icon sequence associated with an alarm may be dependent on the deployment region of the processing system 60 and/or the electric power system 10. The processing system 60 may be configurable for outputting icon sequences as part of the alarm panel 80, 97 in dependence on the deployment location.

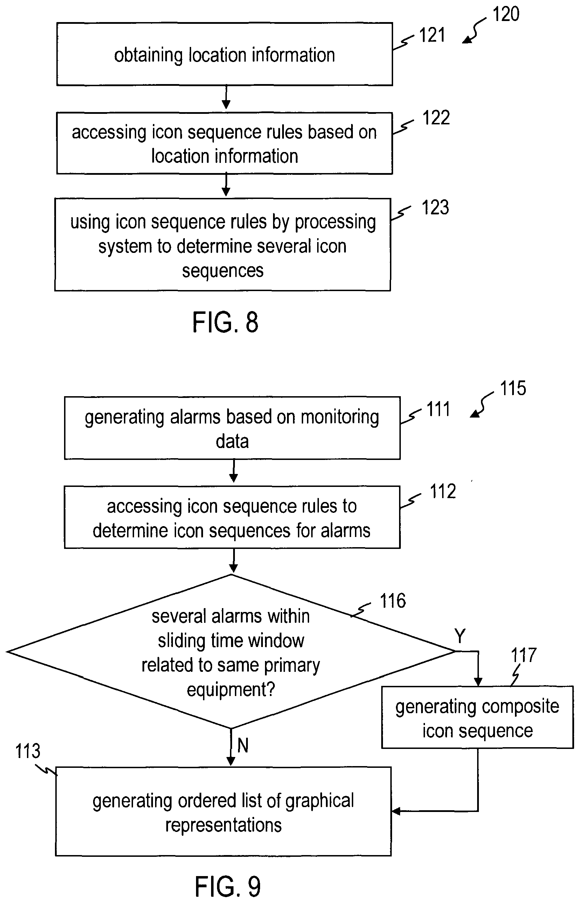

Fig. 8 is a flow chart of a procedure 120. The procedure 120 may be performed automatically by the processing system 60. The procedure 120 may be performed in process block 101 of the method 100 of Fig. 6.

At process block 121, the processing system 60 obtains location information indicating a location (e.g., a country or country region) in which the processing system 60 and/or the electric power system is arranged. Obtaining the location information may comprise processing communication and/or sensor data to obtain the location information. Obtaining the location information may comprise controlling the HMI 62 to enable a location-specifying input.

At process block 122, the processing system 60 accesses the icon sequence rules 64 based on the location information. The processing system 60 may access those icon sequence rules 64 that are provided for the location (e.g., the country) in which the processing system 60 and/or the electric power system 60 is arranged.

At process block 123, the processing system 60 uses the location-specific icon sequence rules 64 retrieved from the storage system 63 to generate the several icon sequences based on the alarms.

It is possible but not required that there be a dedicated graphical representation (e.g., a dedicated icon sequence) for each alarm in the alarm panel 80, 97. The processing system 60 may be operative to form a composite icon sequence that combines information on at least two different alarms occurring at different times into a single, composite icon sequence. A sliding time window technique may be used in this process. The combination into a composite icon sequence may be performed conditionally dependent on whether two or more alarms occur within a sliding time window (triggered by the earliest of the alarms) and involve a same primary system equipment (e.g., a same circuit breaker, power switch, transformer, generator, etc.).

Fig. 9 is a flow chart of a procedure 115. The procedure 115 may be performed automatically by the processing system 60. The procedure may be performed in process block 101 of the method 100 of Fig. 6.

Process blocks 111, 112 may be performed as explained with reference to the procedure 110 of Fig. 7.

At process block 116, the processing system 60 determines whether several alarms are raised within a sliding time window. Process block 116 may further comprise determining whether the several alarms are related to each other, e.g., in the sense that they are caused by a state change of the same primary system equipment. If no such related alarms are identified within the sliding time window, the ordered list of icon sequences is generated at process block 113 without composite icons.

At process block 117, responsive to determining that several related alarms are raised within the sliding time window, the processing system 60 generates a composite icon sequence from the icon sequences for at least two of the related alarms. Generating the composite icon sequence may comprise determining that the last icon in a first ordered set of icons for a first alarm (which form a first icon sequence for the first alarm) is identical to the first icon in the second ordered set of icons for the second alarm (which form a second icon sequence for the second alarm), and forming the composite sequence by concatenating all but the first icon of the second ordered set to the first ordered set. Thereby, a more compact representation is attained. Moreover, the identification of alarm-triggering events that are related to each other is facilitated. The process 115 proceeds to process block 113, wherein the graphical representations comprise at least one composite icon sequence.

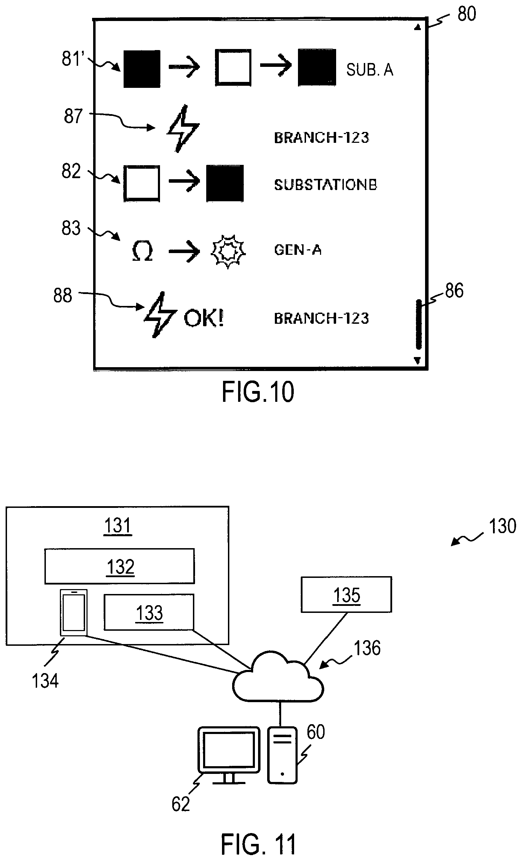

Fig. 10 shows an exemplary layout of an alarm panel 80 output via the HMI 62. The alarm panel 80 comprises graphical representations for alarms. The graphical representations comprise several icon sequences 81', 82, 83, comprising a composite icon sequence 81'. The composite icon sequence 81' indicates several successive state changes of the same primary system equipment (e.g., circuit breaker changes from closed to open and back to closed) that trigger alarms within the sliding time window.

The graphical representations in the alarm panel 80 may be ordered, under the control of the processing system 60, in accordance with an ordering criterion. The ordering criterion may be based on alarm time (e.g., the time at which the alarm generator 71 raises the alarm) and/or priority, without being limited thereto. For composite icon sequences, the time-based ordering may be performed based on the most recent alarm time among the alarm times of the alarms that are represented by the composite icon sequence 81'.

The processing system 60 is operative to control the HMI 62 to enable an operator input that may select the composite icon sequence 81'. Responsive to the operator input, the processing system 60 causes a control action to be performed in relation to the selected composite icon sequence 81'. The control action may comprise any of the control actions already discussed elsewhere herein.

Fig. 11 is a schematic representation of a system 130 which comprises an electric power grid 131. The electric power grid comprises primary system equipment 132, which may be an asset, such as a transformer, a converter/inverter of an HVDC system, a valve hall of an HVDC system, without being limited thereto. The system 130 comprises an operator communication system 133 of a power grid operator. The processing system 60 may be operative, responsive to the operator input or the further operator input, to automatically establish a communication link to the operator communication system 133 or a terminal device 134 of the operator. Thereby, information on alarm occurrence and/or alarm handling can be provided, and/or a corrective or mitigating action can be automatically triggered (such as by automatic deployment of maintenance personnel). Alternatively or additionally, the system 130 may comprise an asset responsible system 135 of a party responsible for an asset involved in the alarm. The processing system 60 may be operative, responsive to the further operator input, to automatically establish a communication link to the asset responsible system 135. Thereby, information on alarm occurrence and/or alarm handling can be provided, and/or a corrective or mitigating action can be automatically triggered. The system 130 comprises a communication system 136, with the processing system 60 being operative to establish the communication link(s) via the communication system 136. The communication system 136 may comprise any one or any combination of a wide area network (WAN); a cellular network; an intra-substation communication system; an inter-substation communication system.

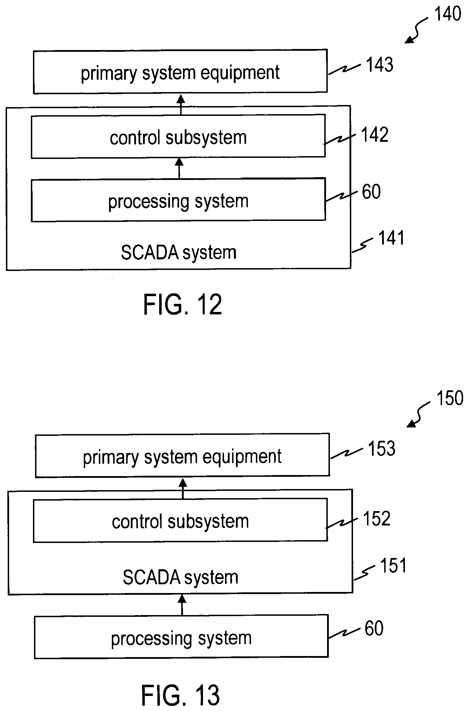

Fig. 12 shows a schematic representation of an electric power system 140 according to an embodiment. The electric power system 140 comprises primary system equipment 143 and a SCADA system 141. The SCADA system 141 comprises the processing system 60 and a SCADA control subsystem 142 communicatively interfaced with the processing system 60. The SCADA control subsystem 142 is operative to perform control actions responsive to the output 69 provided by the processing system 60. The control actions may be dependent on the operator input or the further operator input enabled by the processing system 60.

Fig. 13 shows a schematic representation of an electric power system 150 according to an embodiment. The electric power system 150 comprises primary system equipment 153 and a SCADA system 151. The SCADA system 60 comprises a SCADA control subsystem 152. The SCADA system 151 is communicatively interfaced with the processing system 60. The SCADA control subsystem 152 is operative to perform control actions responsive to the output 69 provided by the processing system 60. The control actions may be dependent on the operator input or the further operator input enabled by the processing system 60.

Various effects and advantages are attained by the processing system, method, and electric power system according to embodiments. The processing systems and methods according to embodiments provide enhanced techniques of processing alarms that mitigate the risk of inadequate handling of alarms, thereby contributing to the safety and reliability of power grid operation. The processing system and method facilitate maintaining situational awareness of alarms even when outputting a screen view different from an alarm list screen view. The processing system and method can be used in association with an electric power grid or subsystems thereof, without being limited thereto.

The processing systems and methods mitigate the risk of inadequate response to an alarm situation when alarms are provided in an alarm list.

The processing system and method address a need caused by the fact that it is often important for power system operators to maintain awareness of alarms while multitasking. Conventionally, an alarm list is quite large, information dense, and typically covers a whole screen. When switching to another task, it may be required to switch screens, which results in a loss of, or at least reduces, alarm list awareness. The processing system and method disclosed herein are operative to represent alarms as a compact sequence of icons, so that operators may maintain peripheral awareness of the alarms while they accomplish other tasks. The alarm panel 80, 97 is not intended to fully communicate the alarms, but instead convey a high level meaning. The icon sequences follow a standard grammar from the alarm formatting, as specified by the icon sequence rules 64.The processing system and method incorporate an icon sequence feed within power electric monitoring and/or control applications.

While icons are widely used in human computer interfaces, arranging icons in a sequence in accordance with rules is not a common use case. The processing system and method are operative to signal explicit meaning of alarms using a formal language of icons. Conventional control applications do not use icon sequences to represent alarms. Instead they use long textual descriptions. Visually transforming the text to compact icon sequences provides various benefits, as discussed in detail herein.

While embodiments have been described in detail with reference to the drawings, various modifications may be implemented in other embodiments. For illustration rather than limitation:
- While embodiments have been described in association with an electric power grid, the techniques disclosed herein may also be used in association with a high voltage direct current (HVDC) control system or a microgrid control system.
- While embodiments have been described in which the processing system 60 is comprised by or communicatively interfaced with a SCADA system, the processing system 60 can also be used in other use cases, e.g., to perform offline analysis of alarms.
- While embodiments have been described in which the processing system is operative to control the HMI to output the two or more icons of an icon sequence concurrently in a spatially ordered manner (e.g., with an icon relating to an earlier state being displayed to the left of an icon relating to a later state of the same power system equipment), the processing system may be operative to control the HMI to output the two or more icons time-sequentially.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A processing system (60) for electric power system control and/or electric power system monitoring, the processing system (60) comprising:
at least one interface (61) operative to receive monitoring data (68) during operation of an electric power system (10); and
at least one processing circuit (70) operative to process the monitoring data (68) to generate alarms and to
control a human machine interface, HMI (62), to output an alarm panel (80; 97) comprising several graphical alarm representations (81-88), the several graphical alarm representations (81-88) comprising several icon sequences (81-86) for at least some of the alarms;
control the HMI (62) to enable an operator input to perform an alarm selection from the several graphical alarm representations (81-88) in the alarm panel (80; 97); and
cause, responsive to the alarm selection, a control action to be performed.

2. The processing system (60) of claim 1, wherein the at least one processing circuit (70) is operative to control the HMI (62) such that the alarm panel (80; 97) comprises the several graphical alarm representations (81-88) as an ordered list.

3. The processing system (60) of claim 1 or claim 2, wherein the at least one processing circuit (70) is operative to control the HMI (62) such that each of the several icon sequences (81-86) represents a state change in the electric power system (10) that triggers an alarm, wherein the at least one processing circuit (70) is operative to identify the state change based on the monitoring data (68).

4. The processing system (60) of claim 3, wherein the several icon sequences (81-86) comprise at least one icon sequence (81-86) indicating a state change of primary system equipment (21-26) of the electric power system (10).

5. The processing system (60) of any one of the preceding claims, wherein the at least one processing circuit (70) is operative to determine the several icon sequences (81-86) based on alarm types of the alarms related to the electric power system (10).

6. The processing system (60) of any one of the preceding claims, wherein the at least one processing circuit (70) is operative to control the HMI (62) such that the several icon sequences (81-86) comprise an animated icon sequence comprising at least two different icons that are output consecutively.

7. The processing system (60) of any one of the preceding claims, wherein the at least one processing circuit (70) is operative to control the HMI (62) such that the several icon sequences (81-86) comprise a composite icon sequence (81') representing at least two different alarms.

8. The processing system (60) of any one of the preceding claims, wherein the at least one processing circuit (70) is operative to control the HMI (62) to output the alarm panel (80) as an overlay over an HMI screen view (91) different from an alarm list screen view (95) prior to the alarm selection.

9. The processing system (60) of any one of the preceding claims, wherein the at least one processing circuit (70) is operative to control the HMI (62) to output the alarm panel (97) as part of an alarm list screen view (95).

10. The processing system (60) of any one of the preceding claims, wherein the at least one processing circuit (70) is operative to identify, responsive to the operator input, a sub-set (96) of an alarm list such that the sub-set comprises an alarm specified by the alarm selection, at least one alarm preceding the alarm specified by the alarm selection, and at least one other alarm following the alarm specified by the alarm selection, and to control, responsive to the operator input, the HMI (62) to output a part of an alarm list that comprises the sub-set (96) of the alarm list.

11. The processing system (60) of any one of the preceding claims, wherein the at least one processing circuit (70) is operative to cause the control action to mitigate or correct an alarm-triggering situation in the electric power system (10).

12. The processing system (60) of any one of the preceding claims, wherein the control action comprises any one or any combination of:
delegating the alarm;
marking the alarm;
acknowledging the alarm;
searching for past occurrences, past resolutions, and/or documentation about the alarm;
navigating to a geographic or technical point of origin of the alarm;
initiating a communication link;
initiating a maintenance ticket.

13. An electric power system (10), comprising:
a primary system (20) comprising primary system equipment (21-26);
a secondary system (40) operative to perform control and/or monitoring functions for the primary system equipment; and
the processing system (60) of any one of the preceding claims operative to communicatively interface with the secondary system to obtain the monitoring data (68).

14. A processing method for an electric power system (10), the processing method comprising:
receiving, by a processing system (60), monitoring data (68) during operation of the electric power system (10);
processing, by at least one processing circuit (70) of the processing system (60), the monitoring data (68) to generate alarms;
controlling, by the at least one processing circuit (70), a human machine interface, HMI (62), to output an alarm panel (80; 97) comprising several graphical alarm representations (81-88), the several graphical alarm representations (81-88) comprising several icon sequences (81-86) for at least some of the alarms;
controlling, by the at least one processing circuit (70), the HMI (62) to enable an operator input to perform an alarm selection from the several graphical alarm representations (81-88) in the alarm panel (80; 97); and
causing, by the at least one processing circuit (70) and responsive to the alarm selection, a control action to be performed.

15. Machine-readable instruction code which, upon execution by at least one programmable processing circuit (70), causes the at least one programmable processing circuit (70) to perform the method of claim 14.
